(19) **Europäisches Patentamt**

**European Patent Office**

**Office européen des brevets**

(11) **EP 1 287 886 A1**

(12) **EUROPÄISCHE PATENTANMELDUNG**

(43) Veröffentlichungstag:
05.03.2003 Patentblatt 2003/10

(51) Int Cl.[7]: **B01J 21/08**, B01J 23/40, B01J 35/10, B01J 37/08, B01J 35/04, B01J 35/02, B01J 37/00, B01J 37/02

(21) Anmeldenummer: 01119213.5

(22) Anmeldetag: 09.08.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **OMG AG & Co. KG**
**63457 Hanau (DE)**

(72) Erfinder:
• **Neuhausen, Ulrich Dr.**
**63796 Kahl am Main (DE)**
• **Lox, Egbert Dr.-Ing.**
**36355 Grebenhain (DE)**
• **Kreuzer, Thomas Dr.**
**61184 Karben (DE)**
• **Klein, Harald Dr.-Ing.**
**63856 Bessenbach (DE)**
• **Gieshoff, Jürgen Dr.**
**63599 Biebergemünd (DE)**

(74) Vertreter: **VOSSIUS & PARTNER**
**Siebertstrasse 4**
**81675 München (DE)**

(54) **Katalysator für die Reinigung der Abgase eines Verbrennungsmotors**

(57) Die Erfindung betrifft einen Katalysator für die Reinigung der Abgase eines Verbrennungsmotors, welcher auf einem inerten Wabenkörper aus Keramik oder Metall eine katalytisch aktive Beschichtung aufweist, die auf einem feinteiligen, oxidischen Trägermaterial wenigstens eines der Platingruppenmetalle Platin, Palladium, Rhodium und Iridium enthält. Der Katalysator enthält als oxidisches Trägermaterial ein Material geringer Porosität auf der Basis von Siliciumdioxid, welches sich aus Aggregaten von kugelförmigen Primärteilchen mit einem mittleren Partikeldurchmesser zwischen 7 und 60 nm zusammensetzt.

**Beschreibung**

Die Erfindung betrifft einen Katalysator für die Reinigung der Abgase eines Verbrennungsmotors, welcher auf einem inerten Wabenkörper aus Keramik oder Metall eine katalytisch aktive Beschichtung aufweist, die auf einem feinteiligen, oxidischen Trägermaterial wenigstens eines der Platingruppenmetalle Platin, Palladium, Rhodium und Iridium enthält. Der Katalysator ist besonders geeignet für die oxidative Reinigung der Abgase von Dieselmotoren, da er eine gute Vergiftungsresistenz gegenüber den Schwefelkomponenten aus dem Dieselkraftstoff hat.

Dieselmotoren werden mit sogenannten mageren Luft/Kraftstoff-Gemischen betrieben, das heißt das dem Motor zugeführte Luft/Kraftstoff-Gemisch enthält mehr Sauerstoff als für die vollständige Verbrennung des Kraftstoffes benötigt wird. Das Abgas von Dieselmotoren enthält neben unverbrannten Kohlenwasserstoffen (HC) und Kohlenmonoxid (CO) auch Stickoxide (NOx) und Rußpartikel. Als weitere Schadstoffkomponente enthält das Abgas Schwefeldioxid, welches von dem im Dieselkraftstoff enthaltenen Schwefel herrührt.

Zur Reinigung der Abgase von Dieselmotoren werden häufig sogenannte Diesel-Oxidationskatalysatoren eingesetzt, die die Kohlenwasserstoffe und das Kohlenmonoxid im Abgas zu unschädlichen Komponenten umsetzen. Außerdem wird durch diese Katalysatoren auch die Partikelmasse im geringen Maße durch Oxidation der auf den Partikeln adsorbierten organischen Verbindungen vermindert.

Typische Katalysatoren dieser Art enthalten auf einem Wabenkörper aus Keramik oder Metall eine Beschichtung aus einem oder mehreren Trägeroxiden (zum Beispiel Aluminiumoxid, Siliciumdioxid, Titandioxid, Ceroxid sowie Mischungen davon), einem oder mehreren Zeolithen sowie Platin als katalytisch aktive Komponente. Die eingesetzten Trägeroxide oder Trägermaterialien sind hochoberflächig, das heißt ihre spezifische Oberfläche (BET-Oberfläche, gemessen nach DIN 66131) beträgt mehr als 10, bevorzugt mehr als 50 $m^2/g$. Die spezifische Oberfläche sollte bis Abgastemperaturen von etwa 800 °C stabil bleiben. Zur Erzielung einer hohen katalytischen Aktivität wird das Platin sehr fein auf den Trägeroxiden verteilt.

Ein Großteil der Emissionen an Kohlenwasserstoffen werden während der Kaltstartphase emittiert, da der Katalysator während dieser Phase noch nicht seine Arbeitstemperatur angenommen hat. Zur Verminderung der Emissionen an Kohlenwasserstoffen während der Kaltstartphase werden den Katalysatoren Zeolithe beigemischt. Zeolithe sind spezielle Alumosilicate mit einer definierten Porenstruktur. Die Porenöffnungen liegen in der Größenordnung kleiner organischer Moleküle. Die Kohlenwasserstoffe werden von den Zeolithen bei tiefer Temperatur gespeichert und bei höheren Temperaturen, bei denen der Katalysator bereits aktiv ist, wieder freigegeben (desorbiert) und somit an den Platin-Kristalliten des Katalysators umgesetzt.

Einen solchen Katalysator beschreibt zum Beispiel die US 5,157,007. Der Katalysator enthält auf einem inerten Wabenkörper eine katalytisch aktive Beschichtung, die als oxidische Trägermaterialien für die katalytisch aktiven Platingruppenmetalle Aluminiumoxid, Titanoxid, Siliciumdioxid, Zeolithe oder Mischungen davon enthält. Als Siliciumdioxid werden sogenannte Fällungskieselsäuren verwendet. Fällungskieselsäuren weisen eine hohe spezifische Oberfläche auf. Ihr pH-Wert in 5 %-iger wäßriger Dispersion liegt über 6 (Schriftenreihe Pigmente Nummer 31: Synthetische Kieselsäuren als Fließhilfsmittel und als Trägersubstanz; Firmenschrift der Degussa AG; 6. Auflage, November 1995). Als Titanoxid wird unter anderem ein pyrogenes Titanoxid mit einer spezifischen Oberfläche von 51 $m^2/g$ eingesetzt.

Die US 5,928,981 beschreibt einen Katalysator für die Reinigung der Abgase von Dieselmotoren, der eine Mischung aus mehreren Zeolithen enthält. Als Trägermaterial für die katalytisch aktiven Platingruppenmetalle enthält der Katalysator weiterhin wenigstens ein Material aus der Gruppe Aluminiumsilicat, Aluminiumoxid und Titanoxid. Als geeignetes Titanoxid wird ebenfalls ein pyrogenes, durch Flammenhydrolyse hergestelltes Titanoxid mit einer spezifischen Oberfläche von 50 $m^2/g$ genannt, welches sich zu 70 Gew.-% aus Anatas und zu 30 Gew.-% aus Rutil zusammensetzt.

In den letzten Jahren wurden große Fortschritte bei der Entwicklung von sparsamen Dieselmotoren erreicht. Aufgrund ihres verbesserten Wirkungsgrades weisen moderne Dieselmotoren sehr niedrige Abgastemperaturen auf, die im Stadtbetrieb unterhalb von 150 °C liegen können. Sie stellen völlig neue Anforderungen an die Dauerhaltbarkeit von Dieselkatalysatoren. Die Reinigung des Abgases solcher Dieselmotoren führt wegen der niedrigen Abgastemperaturen zu einer verstärkten Adsorption der Kohlenwasserstoffe, die die Poren des Katalysators verkleben. Dies ist mit einer Verringerung der katalytischen Aktivität verbunden. Gegebenenfalls kann es zu einem Totalausfall des Katalysators und zu einem Motorversagen aufgrund des hohen Abgasgegendruckes kommen.

Ein Wechselbetrieb bestehend aus längeren Fahrten mit geringer Last gefolgt von starken Beschleunigungsvorgängen in den Vollastbetrieb stellt ein weiteres kritisches Fahrverhalten dar. Dieser Wechselbetrieb kann zu einer thermischen Schädigung des Katalysators führen, wenn es durch längere Fahrten im Niederlastbereich zu einer Adsorption großer Mengen von Kohlenwasserstoffen auf dem Katalysator kommt, die beim Wechsel in den Vollastbetrieb in kurzer Zeit verbrannt werden. Die dabei frei werdende Reaktionswärme kann zu Temperaturen von bis zu 1000 °C auf der Katalysatoroberfläche führen und den Katalysator thermisch schädigen.

Ein weiteres Problem von Katalysatoren für die Abgasreinigung von Dieselmotoren stellt der Schwefelgehalt des Dieselkraftstoffes dar, der in Form von Schwefeldioxid vom Motor emittiert und in Form von Sulfaten vom Katalysator adsorbiert wird und den Katalysator schädigt. Zur Verminderung der Schädigung durch Schwefelkomponenten ist es bekannt, saure Trägeroxide für die katalytisch aktiven Edelmetalle zu verwenden, die Schwefel nur in geringem Maße adsorbieren.

Es ist Aufgabe der vorliegenden Erfindung, einen Diesel-Oxidationskatalysator anzugeben, der eine gegenüber bekannten Katalysatoren verbesserte Alterungsbeständigkeit sowie eine verringerte Neigung zur Vergiftung durch Schwefelkomponenten aufweist.

Diese Aufgabe wird durch einen Katalysator für die Reinigung der Abgase eines Verbrennungsmotors gelöst, welcher auf einem inerten Wabenkörper aus Keramik oder Metall eine katalytisch aktive Beschichtung aufweist, die auf einem feinteiligen, oxidischen Trägermaterial wenigstens eines der Platingruppenmetalle Platin, Palladium, Rhodium und Iridium enthält. Der Katalysator ist dadurch gekennzeichnet, daß das oxidische Trägermaterial ein Material geringer Porosität auf der Basis von Siliciumdioxid ist, welches sich aus Aggregaten von kugelförmigen Primärteilchen mit einem mittleren Partikeldurchmesser zwischen 7 und 60 nm zusammensetzt.

Erfindungsgemäß wird ein spezielles Siliciumdioxid als Trägermaterial eingesetzt, welches aus Aggregaten von kugelförmigen Primärteilchen besteht. "Kugelförmig" bezeichnet im Rahmen dieser Erfindung eine Teilchenform, die eine glatte Oberfläche aufweist und deren geometrische Form nahezu eine Kugel ist. Aber auch tröpfchenförmige Primärteilchen oder unregelmäßig geformte Primärteilchen mit glatter Oberfläche, die der Kugelgestalt nahe kommen, fallen unter diese Definition. Ein Kennzeichen dieses Materials ist die Tatsache, daß seine spezifische Oberfläche zum überwiegenden Teil auf die geometrische Oberfläche (äußere Oberfläche) der Primärteilchen zurückgeht, das heißt das Material weist kaum Poren auf. Es ist im wesentlichen unporös.

Das erfindungsgemäß zu verwendende Material kann in einfacher Weise mit Hilfe eines Elektronenmikroskops von üblichen, porösen Siliciumdioxidqualitäten unterschieden werden. Die elektronenmikroskopischen Untersuchungen zeigen deutlich die unporöse Struktur der Primärteilchen und erlauben die Bestimmung ihres mittleren Teilchendurchmessers. Diese Untersuchungen sind auch noch an Proben der fertigen, katalytischen Beschichtung möglich und erlauben eine eindeutige Identifizierung des Materials.

Das unporöse Siliciumdioxid kann zum Beispiel durch die sogenannte Flammenhydrolyse von Siliciumtetrachlorid gewonnen werden (siehe zum Beispiel die Schriftenreihe Pigmente der Degussa AG Nummer 11, 5. Auflage, August 1991: Grundlagen von Aerosil). Hierbei wird Siliciumtetrachlorid in die Gasphase überführt und reagiert anschließend innerhalb einer Knallgasflamme mit dem intermediär gebildeten Wasser spontan und quantitativ unter Bildung des gewünschten Siliciumdioxids. Aber auch im Lichtbogen und in einem Plasma können solche Materialien hergestellt werden. Durch Flammenhydrolyse hergestelltes Siliciumdioxid wird im folgenden auch als pyrogenes Siliciumdioxid bezeichnet.

Die entstehenden Primärteilchen sind wegen der Erstarrung aus der Schmelze nahezu kugelförmig. Sie lagern sich mit anderen Primärteilchen zusammen und bilden sogenannte Aggregate, die in der Regel nicht wieder in die Primärteilchen aufgespalten werden können.

Die Größe der Primärteilchen kann durch die Verfahrensparameter der Flammenhydrolyse zwischen etwa 7 und 60 nm eingestellt werden. Bevorzugt wird für den erfindungsgemäßen Katalysator ein Material mit einer mittleren Primärteilchengröße von mehr als 15 nm eingesetzt, welches eine spezifischen Oberfläche von etwa 150 m$^2$/g aufweist. Besonders bevorzugt besitzt das Trägermaterial eine mittlere Primärteilchengröße zwischen 20 und 50 nm mit einer spezifischen Oberfläche zwischen 90 und 40 m$^2$/g.

Das pyrogene Siliciumdioxid ist im wesentlichen unporös und weist ein Porenvolumen für Porendurchmesser kleiner als 30 nm von weniger als 0,2 ml/g auf. Seine Porenradienverteilung besitzt in der Regel ein Maximum oberhalb von 20 nm. Es handelt sich um ein saures Material, das heißt sein pH-Wert in einer 4 %-igen Dispersion beträgt weniger als 6, bevorzugt weniger als 5,5.

Zur Erhöhung der thermischen Stabilität kann das Trägermaterial mit einem oder mehreren Oxiden aus der Gruppe Aluminiumoxid, Zirkonoxid, Erdalkalimetalloxiden und Seltenerdoxiden dotiert sein. Die Masse aller Dotierungselemente sollte dabei zusammen zwischen 0,01 und 20 Gew.-% liegen, bezogen auf das Gesamtgewicht des Trägermaterials. Bevorzugt erfolgt die Dotierung des Siliciumdioxids, wie in der EP 0 995 718 A1 beschrieben, mit Hilfe eines Aerosols. Zur Dotierung speist man gemäß dieser Offenlegungsschrift in eine Flamme, wie sie zur pyrogenen Herstellung von Kieselsäure nach der Art der Flammenoxidation oder Flammenhydrolyse benutzt wird, ein Aerosol ein, welches Salze oder Salzmischungen des Dotierungselementes oder das Element selbst in gelöster oder suspendierter Form oder Mischungen davon enthält. Nach der Reaktion in der Flamme wird das dotierte Siliciumdioxid vom Gasstrom abgetrennt.

Bevorzugt wird ein Trägermaterial verwendet, welches mit Aluminiumoxid in einer Menge zwischen 0,05 und 1 Gew.-% dotiert ist.

Da das erfindungsgemäß für die katalytisch aktive Beschichtung zu verwendende Siliciumdioxid nur eine geringe Porosität aufweist, wird die Adsorption von den für die primäre Vergiftung ("das Verkleben der Poren") verantwortlichen Kohlenwasserstoffen weitgehend unterdrückt. Sekundäre Alterungseffekte durch Abbrand akkumulierter Kohlenwasserstoffe und die damit verbundene thermische Schädigung des Katalysators werden somit vermieden.

Vorteilhaft ist ebenfalls, daß das Trägermaterial sauer ist. Dadurch wird der Einbau des im Abgas enthaltenen Schwefeldioxids in das Trägeroxid in Form von Sulfaten erschwert. Die Einlagerung der im Abgas von Verbrennungsmotoren enthaltenen Schwefelkomponenten in Katalysatoren beruht auf einer Säure-Base-Reaktion und ist besonders bei basischen Trägermaterialien wirksam.

Bevorzugt weist der erfindungsgemäße Katalysator also folgende Merkmalskombination auf:

Er enthält auf einem inerten Wabenkörper aus Keramik oder Metall eine katalytisch aktive Beschichtung, die auf einem feinteiligen, oxidischen Trägermaterial wenigstens eines der Platingruppenmetalle Platin, Palladium, Rhodium und Iridium enthält. Das oxidische Trägermaterial ist ein feinteiliges Siliciumdioxid mit folgenden Eigenschaften:

a) es setzt sich aus Aggregaten von kugelförmigen Primärteilchen mit einem mittleren Partikeldurchmesser zwischen 15 und 60 nm zusammen,
b) die spezifische Oberfläche liegt zwischen 30 und 150 $m^2/g$,
c) das Maximum der Porenradienverteilung befindet sich oberhalb von 20 nm,
d) das Gesamtvolumen der Poren mit einem Porendurchmesser kleiner als 30 nm ist geringer als 0,2 ml/g und
e) der pH-Wert einer 4 %-igen wäßrigen Dispersion des Trägermaterials weist einen Wert von weniger als 6 auf.

Bevorzugt wird für den erfindungsgemäßen Katalysator Platin als katalytisch aktive Komponente verwendet, welches durch bekannte Techniken auf dem Trägermaterial in hochdisperser Form abgeschieden wird.

Der erfindungsgemäße Katalysator kann in der katalytisch aktiven Beschichtung zusätzlich Zeolithe enthalten, um die Emission von Kohlenwasserstoffen bei niedrigen Abgastemperaturen zu vermindern. Die Zeolithe werden ebenfalls mit Platin belegt, um eine kontinuierliche Verbrennung der adsorbierten Kohlenwasserstoffe zu gewährleisten. Die Zeolithe leisten also einen weiteren Beitrag zur Verringerung der Akkumulation von Kohlenwasserstoffen auf dem Katalysator. Als bevorzugte Zeolithe werden ein dealuminierter Y-Zeolith, ein Beta-Zeolith oder ein Zeolith ZSM-5, jeweils mit einem Modul von größer als 40, eingesetzt. Unter dem Modul eines Zeolithen wird sein Molverhältnis von Siliciumdioxid zu Aluminiumoxid verstanden. Je größer das Modul ist, umso kleiner ist der Gehalt des Zeolithen an Aluminiumoxid. Allgemein gilt, daß die Temperaturstabilität und die Stabilität eines Zeolithen gegen Säureangriff mit steigendem Modul zunimmt.

Die genannten Zeolithe können allein oder in Kombination untereinander oder mit anderen Zeolithen eingesetzt werden. Bevorzugt liegt das Gewichtsverhältnis des Siliciumdioxids zu den im Katalysator enthaltenen Zeolithen zwischen 6:1 und 1:2. Zur Gewährleistung eines kontinuierlichen Abbrandes des von den Zeolithen adsorbierten Kohlenwasserstoffen reicht es aus, wenn nur ein kleiner Anteil des insgesamt im Katalysator enthaltenen Platins auf den Zeolithen abgeschieden ist. Es hat sich gezeigt, daß hierfür 1 bis 20 Gew.-% des insgesamt im Katalysator vorhandenen Platins ausreichend sind.

Der erfindungsgemäße Katalysator besteht aus einem inerten Wabenkörper, auf dem die katalytisch aktive Beschichtung abgeschieden ist. Geeignete Wabenkörper für den Katalysator sind solche aus Keramik (zum Beispiel aus Cordierit) oder aus Metall, wie sie im großen Maßstab für die Autoabgasreinigung eingesetzt werden. Sie weisen im allgemeinen eine zylindrische Form auf und werden von einer Eingangsstirnfläche zur Ausgangsstirnfläche von Strömungskanälen für das zu reinigende Abgas durchzogen. Die Dichte der Strömungskanäle über den Querschnitt der Wabenkörper wird als Zelldichte bezeichnet. Sie liegt typischerweise zwischen 40 und 250 $cm^{-2}$. Die katalytisch aktive Beschichtung befindet sich auf den Wänden der Strömungskanäle und steht somit im direkten Kontakt mit dem vorbeiströmenden Abgas.

Für die katalytische Aktivität des Katalysators ist die Höhe der Beladung mit der katalytisch aktiven Beschichtung wichtig. Die Beladung wird als Konzentration, das heißt als Masse pro äußerem Volumen des Wabenkörpers (g/l) angegeben. Diese Konzentration liegt für die katalytische aktive Beschichtung bevorzugt zwischen 40 und 300 g/l und für die Platingruppenmetalle zwischen 0,01 und 8 g/l Wabenkörpervolumen.

Zur Anfertigung des Katalysators wird eine Aufschlämmung oder Beschichtungssuspension aus den feinteiligen Pulvermaterialien der späteren katalytisch aktiven Beschichtung hergestellt und der Wabenkörper damit beschichtet. Die Verfahren zur Beschichtung eines Wabenkörpers mit der katalytisch aktiven Beschichtung sind dem Fachmann wohlbekannt. Die Aufschlämmung der Pulvermaterialien erfolgt bevorzugt in Wasser.

Die Abscheidung der Platingruppenmetalle auf den Trägermaterialien (Siliciumdioxid, Zeolithe und gegebenenfalls weitere Komponenten) kann zu unterschiedlichen Zeiten des Herstellungsprozesses erfolgen. Bevorzugt werden die Platingruppenmetalle auf den Trägermaterialien vor dem Anfertigen der Beschichtungssuspension abgeschieden. Dies ermöglicht es, die Platingruppenmetalle selektiv und in unterschiedlichen Konzentrationen auf den verschiedenen Trägermaterialen abzuscheiden. So kann das Siliciumdioxid mit einer höheren Konzentration an Platin belegt werden als die Zeolithe.

Für die Abscheidung der Platingruppenmetalle auf den pulverförmigen Trägermaterialien werden solche Verfahren angewendet, die zu einer hohen Dispersion der Platingruppenmetalle auf den Oberflächen der Trägermaterialien mit Korngrößen der Metallkristallite zwischen 1 und 50, bevorzugt zwischen 2 und 20 nm, führen. Besonders geeignet hierfür sind die sogenannte Porenvolumenimprägnierung und die homogene Abscheidung.

Bei der Porenvolumenimprägnierung einer vorgelegten Menge des Trägermaterials werden Vorläuferverbindungen der Platingruppenmetalle in einer Menge Wasser gelöst, deren Volumen 70 bis 110 % der zuvor ermittelten Wasseraufnahmekapazität des Trägermaterials entspricht. Zweckmäßigerweise wird das Trägermaterial in einem Dragierkessel umgewälzt während es mit der Lösung der Platingruppenmetalle besprüht wird.

Nach Abschluß der Porenvolumenimprägnierung bildet das imprägnierte Trägermaterial ein trotz des Wassergehaltes noch rieselfähiges Pulver.

Die homogene Abscheidung wird in dem Patent US 6,103,660 beschrieben. Bei diesem Verfahren wird das Trägermaterial zusammen mit einer Vorläuferverbindung der Platingruppenmetalle in Wasser suspendiert. Durch Injektion einer basischen oder sauren Lösung in die Suspension mit Hilfe einer Kapillare (Kapillarinjektion) wird die Vorläuferverbindung auf der Oberfläche des Trägermaterials abgeschieden. Um ein homogenes Ausfällen in der ganzen Lösung gleichzeitig zu gewährleisten, muß die basische oder saure Lösung langsam zugeführt und durch Rühren der Suspension gleichmäßig in dieser verteilt werden.

Als Vorläuferverbindungen der Platingruppenmetalle für diese Imprägnierverfahren eignen sich alle löslichen Verbindungen, die sich beim Calcinieren in Luft zu den katalytisch aktiven Komponenten zersetzen. Beispielhaft für solche Verbindungen sind Hexachloroplatinsäure, Tetrachloroplatinsäure, Diammindinitroplatin-(II), Tetraamminplatin-(II)-chlorid, Ammoniumtetrachloroplatinat-(II), Ammoniumhexachloroplatinat-(IV), Platinethylendiamindichlorid, Tetraamminplatin(II)-Nitrat, Tetraamminplatin(II)-Hydroxid, Methylethanolamin-Platin-(II)-hydroxid, Platinnitrat, Palladiumchlorid, Palladiumnitrat, Diammindinitropalladium-(II), Tetraamminpalladium-(II)-Hydroxid, Rhodiumchlorid, Rhodiumnitrat und Hexachloroiridiumsäure.

Nach der Imprägnierung können die katalytisch aktiven Komponenten auf dem Trägermaterial vor der weiteren Verarbeitung durch Calcinierung an Luft bei Temperaturen zwischen 200 und 600 °C fixiert werden. Hierbei werden die Vorläuferverbindungen der Platingruppenmetalle zu Oxiden verschiedener Oxidationsstufen zersetzt. Die Calcinierung kann zum Beispiel in einem Drehrohrofen vorgenommen werden. Bevorzugt erfolgt die Calcinierung mit Hilfe des Verfahrens der Sprühcalcinierung. Hierbei wird das imprägnierte Material in einen durch Methanverbrennung erzeugten heißen Gasstrom eingeblasen und bei einer Gastemperatur von 700 bis 1000 °C und einer Verweilzeit im Gasstrom von Bruchteilen einer Sekunde bis zu wenigen Minuten calciniert. Die Sprühcalcinierung pulverförmiger Stoffe wird in der US 6,228,292 B 1 beschrieben. Eine Calcinierung vor der weiteren Verarbeitung der katalysierten Trägermaterialien ist jedoch nicht in jedem Fall erforderlich.

Sowohl das erfindungsgemäß zu verwendende unporöse Siliciumdioxid als auch die weiteren oxidischen Trägermaterialien des Katalysators können auf diese Weise mit den gewünschten, katalytisch aktiven Platingruppenmetallen belegt werden, wobei gewöhnlich Konzentrationen zwischen 0,01 und 10 Gew.-% Platingruppenmetalle, bezogen auf das Gesamtgewicht aus Trägermaterial und Platingruppenmetallen, zur Anwendung kommen.

Zur Beschichtung der Wabenkörper mit den so erhaltenen Katalysatormaterialien wird eine zumeist wäßrige Suspension dieser Materialien angefertigt. Mit dieser Suspension werden die Wabenkörper in bekannter Weise beschichtet, das heißt es werden im wesentlichen die Wandflächen der Trennwände zwischen den Strömungskanälen mit einer Beschichtung belegt. Die Beschichtung wird bei erhöhter Temperatur getrocknet und gegebenenfalls bei Temperaturen zwischen 200 und 600 °C an Luft calciniert. Falls erforderlich, kann die so hergestellte Beschichtung nachträglich mit weiteren Vorläuferverbindungen der Platingruppenmetalle oder von Unedelmetallen imprägniert werden.

Vorteilhafterweise verwendet man für die Anfertigung der Beschichtungssuspension das erfindungsgemäß zu verwendende, pyrogene Siliciumdioxid in einer agglomerierten Form mit einer Stampfdichte von mehr als 200 g/l, bevorzugt von mehr als 500 g/l und insbesondere von mehr als 600 g/l. In dieser agglomerierten Form läßt es sich besser zu einer Beschichtungssuspension verarbeiten. Dagegen weist das nicht agglomerierte, pyrogene Siliciumdioxid nur eine Stampfdichte von weniger als 100 g/l auf und läßt sich daher nur schwer verarbeiten.

Die Stampfdichte ist gleich dem Quotienten aus der Masse und dem Volumen eines Pulvers nach dem Stampfen im Stampfvolumeter unter festgelegten Bedingungen (siehe DEN ISO 787/XI). Die im Rahmen dieser Erfindung verwendeten Begriffe Primärteilchen, Aggregate und Agglomerate sind in der DIN 53206, Blatt 1, definiert.

Für die Agglomeration des pulverförmigen, pyrogenen Siliciumdioxids hat sich das Verfahren der Sprühtrocknung bewährt. Zu diesem Zweck wird das Pulvermaterial mit Hilfe bekannter Dispergieraggregate in Wasser suspendiert. Für die folgende Sprühtrocknung sind Suspensionen mit einem Feststoffgehalt zwischen 100 und 600 g/l geeignet. Die Suspension wird dann zum Beispiel mit einer Zweistoffdüse in einen Sprühtrockner eingedüst und dort bei Betriebstemperaturen im Bereich zwischen 200 und 450 °C getrocknet. Die hierbei gebildeten Agglomerate haben eine mittlere Korngröße zwischen 15 und 30 μm.

Alternativ zu der bisher beschriebenen Vorgehensweise, wonach die pulverförmigen Trägermaterialien in einem vorgelagerten Verfahren mit den katalytisch aktiven Platingruppenmetallen und gegebenenfalls Promotoren belegt, das heißt katalysiert, und erst danach in Form einer Beschichtung auf die Wabenkörper aufgebracht werden, besteht auch die Möglichkeit, die Wabenkörper mit den nicht katalysierten Trägermaterialien zu beschichten und erst danach die Platingruppenmetalle und gegebenenfalls Promotoren in die Beschichtung durch Imprägnieren einzubringen. Eine Kombination beider Verfahren ist ebenfalls möglich.

So kann zum Beispiel eine Beschichtung aus pyrogenem Siliciumdioxid und Zeolithen mit einem Gewichtsverhältnis des Siliciumdioxids zu den Zeolithen von 6:1 bis 1:2 nachträglich mit Platin imprägniert werden, um damit einen Oxidationskatalysator für die Reinigung der Abgase von Dieselmotoren zu erhalten. Auf Grund der Acidität und der geringen Porosität der für den Katalysator verwendeten Trägermaterialien absorbiert er nur geringe Schwefelmengen aus dem Abgas und bewahrt sich so eine hohe katalytische Aktivität auch noch nach langer Betriebsdauer in einem Schwefeldioxid enthaltenden Abgas. Er ist also hervorragend für die oxidative Reinigung der Abgase von Dieselmotoren geeignet. So wurden zum Beispiel nach der in Anwendungsbeispiel 1 beschriebenen Ofenalterung in einem durchströmenden, synthetischen Abgas mit 85 Vol.ppm Schwefeldioxid weniger als 0,25 Gew.-% Schwefeldioxid, bezogen auf das Gesamtgewicht des Katalysators aus Wabenkörper und Beschichtung, gemessen. Nach der in Anwendungsbeispiel 2 beschriebenen Alterung am Motor für 45 Stunden unter Verwendung eines Dieseltreibstoffs mit 2400 Gew.-ppm Schwefel wurden ebenfalls weniger als 0,25 Gew.-% Schwefeldioxid, bezogen auf das Gesamtgewicht des Katalysator aus Wabenkörper und Beschichtung, ermittelt. Außerdem hatte sich die spezifische Oberfläche des Katalysators um weniger als 20% gegenüber dem Wert vor Beginn der Alterung vermindert.

Die folgenden Beispiele und Untersuchungen sollen die Erfindung näher erläutern.

### Untersuchung von Trägermaterialien:

Verschiedene Metalloxide, die in den nachfolgenden Katalysatoren Verwendung fanden, wurden hinsichtlich ihrer spezifischen Oberfläche, ihrer Porenstruktur sowie ihrer Acidität charakterisiert. Die Acidität wurde als der pH-Wert einer wäßrigen Dispersion des jeweiligen Trägermaterials mit 4 Gew.-% Trägermaterial, bezogen auf das Gesamtgewicht der Dispersion, bestimmt. Tabelle 1 faßt die Ergebnisse zusammen.

Tabelle 1:

| Charakterisierung von Metalloxiden hinsichtlich spezifischer Oberfläche, Porenstruktur und pH-Wert einer wäßrigen Dispersion | | | | | |
|---|---|---|---|---|---|
| Nr. | Trägermaterial | Spezifische Oberfläche $[m^2/g]$ | Maximum der Porenradien-verteilung [nm] | Porenvolumen für Poren < 30 nm [ml/g] | pH-Wert einer 4 Gew.%-igen wäßrigen Dispersion |
| 1 | $Al_2O_3$ | 134 | 10 | 0,47 | 8,0 |
| 2 | $Al_2O_3/SiO_2$ *) | 311 | 6,5 | 0,65 | 7,7 |
| 3 | $Al_2O_3/SiO_2$ *) | 153 | 10 | 0,50 | 7,5 |
| 4 | $SiO_2$ | 234 | 10 | 0,80 | 5,2 |
| 5 | $SiO_2$ | 159 | 10,5 | 0,75 | 5,4 |
| 6 | $SiO_2$ | 65 | 45 | 0,09 | 4,7 |

*) Aluminiumsilicat mit 5 Gew.-% $SiO_2$

Das Trägermaterial Nr. 6 entspricht den für den erfindungsgemäßen Katalysator gestellten Anforderungen. Es handelt sich um ein pyrogen hergestelltes Trägermaterial mit einer mittleren Größe der Primärteilchen von 40 nm. Seine Oberfläche ist im Vergleich zu den Trägermaterialien Nr. 1 bis Nr. 5 relativ gering. Die geringe Oberfläche beruht auf seiner geringen Porosität, die sich durch die Porenradienverteilung und das geringe Mesoporenvolumen ausdrückt. Der pH-Wert des Materials in 4 Gew.-%-iger, wäßriger Dispersion ist sauer (pH=4,7). Dies führt zu einer deutlich verminderten Einlagerung des ebenfalls sauren Schwefeldioxids bzw. Schwefeltrioxids. Ein Katalysator auf Basis dieses Trägermaterials ist somit resistent gegenüber einem Schwefeldioxid enthaltenden Abgas.

In den folgenden Beispielen und Vergleichsbeispielen wurden jeweils zwei verschiedene, offenzellige Wabenkörper (Wabenkörper Typ 1 und Wabenkörper Typ 2) mit einer katalytischen Beschichtung gemäß der Erfindung beschichtet. Die Daten dieser Wabenkörper sind in Tabelle 2 niedergelegt.

Tabelle 2:

| Daten der verwendeten Wabenkörper | | | | | |
|---|---|---|---|---|---|
| Typ | Material | Durchmesser [cm] | Länge [cm] | Zelldichte [cm$^{-2}$] | Wandstärke [mm] |
| 1 | Cordierit | 11,83 | 7,6 | 62 | 0,2 |
| 2 | Cordierit | 11,83 | 15,24 | 62 | 0,16 |

**Vergleichsbeispiel 1:**

Es wurden zwei Katalysatoren aus einem Gemisch zweier mit Platin katalysierter Pulver angefertigt.

Zur Herstellung von Pulver 1 wurde 1 kg von Trägermaterial Nr. 3 (Aluminiumsilicat) in einem Dragierkessel vorgelegt. Das Aluminiumsilicat besaß eine Wasseraufnahmekapazität von 800 ml/kg. Unter ständigem Umwälzen wurde das Aluminiumsilicat mit 766 ml einer wäßrigen Lösung von Ethanolaminplatin-(IV)-Hexahydroxid $((EA)_2Pt(OH)_6$ = $(OH-C_2H_4-NH_3)_2+PtIV(OH)_6)$ mit einem Volumenstrom von 56 ml/(kg · min) besprüht. Das noch rieselfähige, feuchte Pulver wurde durch Einblasen in einen durch Methanverbrennung erzeugten heißen Gasstrom bei einer Gastemperatur von 780 °C und einer Verweilzeit im Gasstrom von circa einer Sekunde calciniert (Sprühcalcinierung).

Das so hergestellte Pt-Aluminiumsilicatpulver (Pulver 1) wies einen Platingehalt von 2,79 Gew.-% auf.

Zur Herstellung von Pulver 2 wurde 1 kg eines Y-Zeolithen mit einem Modul von 60 in einem Dragierkessel vorgelegt. Der Zeolith besaß eine Wasseraufnahmekapazität von 1350 ml/kg. Unter ständigem Umwälzen wurde der Y-Zeolith mit 242 ml einer wäßrigen Lösung von Ethanolaminplatin-(IV)-Hexahydroxid mit einem Volumenstrom von 56 ml/(kg · min) besprüht. Das noch rieselfähige, feuchte Pulver wurde wie Pulver 1 calciniert.

Das Pt-Zeolithpulver (Pulver 2) wies einen Platingehalt von 0,88 Gew.-% auf.

6 Anteile von Pulver 1 und ein Anteil von Pulver 2 wurden in Wasser suspendiert und durch Mahlen in einer Kugelmühle homogenisiert. Die Feststoffkonzentration der fertigen Beschichtungssuspension betrug 35 Gew.-%. Der pH-Wert der Beschichtungssuspension lag bei 6,5.

Jeweils ein Wabenkörper Typ 1 und ein Wabenkörper Typ 2 wurde durch Eintauchen in die Beschichtungssuspension mit 126 g Trockenmasse pro Liter Wabenkörpervolumen beschichtet. Die Beschichtung wurde bei 120 °C an Luft getrocknet und bei 300 °C für 4 h an Luft calciniert und abschließend in einem Strom aus Formiergas für 2 h bei 500 °C reduziert.

Die fertigen Katalysatoren enthielten pro Liter Katalysatorvolumen 3,17 g Platin.

Tabelle 3 gibt die wichtigsten Herstellbedingungen für die Katalysatoren dieses und der folgenden Beispiele wieder.

**Vergleichsbeispiel 2**

Es wurden zwei weitere Vergleichskatalysatoren analog zu Vergleichsbeispiel 1 hergestellt. Im Unterschied zu Vergleichsbeispiel 1 wurde für Pulver 1 Trägermaterial Nr. 2 mit doppelter spezifischer Oberfläche (5 Gew.-% Siliciumdioxid; spezifische Oberfläche: 311 m$^2$/g) eingesetzt.

**Vergleichsbeispiel 3**

Es wurden zwei weitere Vergleichskatalysatoren analog zu Vergleichsbeispiel 1 hergestellt. Im Unterschied zu Vergleichsbeispiel 1 wurde für Pulver 1 Trägermaterial Nr. 1 (reines Aluminiumoxid) mit einer spezifischen Oberfläche von 134 m$^2$/g eingesetzt.

**Vergleichsbeispiel 4**

Es wurden zwei weitere Vergleichskatalysatoren analog zu Vergleichsbeispiel 1 hergestellt. Im Unterschied zu Vergleichsbeispiel 1 wurde für Pulver 1 Siliciumdioxid mit einer spezifischen Oberfläche von 234 m$^2$/g eingesetzt (Trägermaterial Nr. 4).

**Beispiel 1**

Es wurden zwei Katalysatoren aus einem Gemisch zweier mit Platin katalysierter Pulver angefertigt.

Zur Herstellung von Pulver 1 wurde 1 kg von Trägermaterial Nr. 6 (Siliciumdioxid geringer Porosität) mit einer spezifischen Oberfläche von 65 m$^2$/g in einem Dragierkessel vorgelegt. Das geringporöse Siliciumdioxid besaß eine Wasseraufnahmekapazität von 500 ml/kg. Unter ständigem Umwälzen wurde das Siliciumdioxid mit 445 ml einer wäßrigen Lösung von Ethanolaminplatin (IV) Hexahydroxid mit einem Volumenstrom von 56 ml/(kg · min) besprüht. Das noch rieselfähige, feuchte Pulver wurde durch Einblasen in einen durch Methanverbrennung erzeugten heißen Gasstrom bei einer Gastemperatur von 780 °C und einer Verweilzeit im Gasstrom von circa einer Sekunde calciniert (Sprühcalcinierung).

Das so hergestellte Pt-Siliciumdioxidpulver (Pulver 1) wies einen Platingehalt von 2,79 Gew.-% auf.

Als zweites Katalysatorpulver wurde Pulver 2 von Vergleichsbeispiel 1 verwendet.

6 Anteile von Pulver 1 und ein Anteil von Pulver 2 wurden in Wasser suspendiert und durch Mahlen in einer Kugelmühle homogenisiert. Die Feststoffkonzentration der fertigen Beschichtungsdispersion betrug 35 Gew.-%. Der pH-Wert der Beschichtungsdispersion lag bei 5,1.

Analog zu Vergleichsbeispiel 1 wurden 2 monolithische Wabenkörper durch Beschichten mit 126 g Trockenmasse pro Liter Wabenkörpervolumen hergestellt.

Die Beschichtung wurde bei 120 °C an Luft getrocknet und bei 300 °C für 4 h an Luft calciniert und abschließend in einem Strom aus Formiergas für 2 h bei 500 °C reduziert.

Die fertigen Katalysatoren enthielten pro Liter Katalysatorvolumen 3,17 g Platin.

### Beispiel 2

Es wurde zwei Katalysatoren aus einem Gemisch zweier mit Platin katalysierter Pulver angefertigt.

Als erstes Katalysatorpulver wurde Pulver 1 von Beispiel 1 verwendet.

Zur Herstellung von Pulver 2 wurde 1 kg einer Mischung bestehend aus 500 g eines Y-Zeolithen mit einem Modul von 60 und 500 g eines ZSM-5-Zeolithen mit einem Modul > 400 in einem Dragierkessel vorgelegt. Die Zeolithmischung besaß eine Wasseraufnahmekapazität von 1180 ml/kg. Unter ständigem Umwälzen wurde die Zeolithmischung mit 320 ml einer wäßrigen Lösung von Ethanolaminplatin (IV) Hexahydroxid mit einem Volumenstrom von 56 ml/(kg · min) besprüht. Das noch rieselfähige, feuchte Pulver wurde nicht calciniert, sondern direkt für die Anfertigung der Beschichtungssuspension eingesetzt.

Das Pt-Zeolithpulver (Pulver 2) wies einen Platingehalt von 0,50 Gew.-% auf.

2,2 Anteile von Pulver 1 und ein Anteil von Pulver 2 wurden in Wasser suspendiert und durch Mahlen in einer Kugelmühle homogenisiert. Die Feststoffkonzentration der fertigen Beschichtungssuspension betrug 35 Gew.-%. Der pH-Wert der Beschichtungssuspension betrug 4,9.

Analog zu Vergleichsbeispiel 1 wurden 2 monolithische Wabenkörper (Typ1 und Typ 2) durch Beschichtung mit 97 g Trockenmasse pro Liter Wabenkörpervolumen hergestellt.

Die Beschichtung wurde bei 120 °C an Luft getrocknet und bei 300 °C für 4 h an Luft calciniert und abschließend in einem Strom aus Formiergas für 2 h bei 500 °C reduziert.

Die fertigen Katalysatoren enthielten pro Liter Katalysatorvolumen 3,17 g Platin.

### Beispiel 3

Es wurden zwei weitere Katalysatoren analog zu Beispiel 2 hergestellt. Im Unterschied zu Beispiel 2 wurde Pulver 1 nicht sprühcalciniert, sondern wie Pulver 2 feucht zur Beschichtungssuspension weiterverarbeitet.

### Beispiel 4

Es wurden zwei weitere Katalysatoren analog zu Beispiel 2 hergestellt. Im Unterschied zu Beispiel 2 besaß Pulver 1 eine Platinkonzentration von 2,52 Gew.-%.

Für die Beschichtungsdispersion wurden 1,2 Teile Pulver 1 und 1 Teil Pulver 2 verwendet. Analog zu Vergleichsbeispiel 1 wurden 3 monolithische Wabenkörper durch Beschichtung mit 66 g Trockenmasse pro Liter Wabenkörpervolumen hergestellt.

Die fertigen Katalysatoren enthielten pro Liter Katalysatorvolumen 1,06 g Platin.

### Beispiel 5

Es wurden zwei weitere Katalysatoren analog zu Beispiel 2 hergestellt. Im Unterschied zu Beispiel 2 wurde für Pulver 1 und Pulver 2 als Platinvorläufersubstanz Tetraamminplatin-(II)-nitrat [Pt(NH$_3$)$_4$](NO$_3$)$_2$ verwendet.

**Beispiel 6**

Es wurden zwei weitere Katalysatoren analog zu Beispiel 2 hergestellt. Im Unterschied zu Beispiel 2 wurde für Pulver 1 und Pulver 2 als Platinvorläufersubstanz Tetraamminplatin(II)-hydroxid $[Pt(NH_3)_4](OH)_2$ verwendet.

**Anwendungsbeispiel 1**

Die katalytischen Aktivitäten der Abgasreinigungskatalysatoren der vorstehenden Beispiele wurden an einer Synthesegasanlage gemessen. Mit dieser Anlage ist es möglich, alle im realen Abgas eines Dieselmotors vorhandenen gasförmigen Abgaskomponenten zu simulieren. Die gewählten Prüfbedingungen und die Modellgaszusammensetzung sind in Tabelle 4 aufgelistet. Als Kohlenwasserstoffkomponente wurde Propen verwendet.

Tabelle 4:

| Prüfbedingungen und Modellgaszusammensetzung zur Bestimmung der Umsetzungsraten der Schadstoffe CO, HC, $NO_x$ und $SO_2$ in der Synthese gasanlage. | |
|---|---|
| **Komponente** | **Konzentration** |
| CO | 350 [vppm] |
| $H_2$ | 117 [vppm] |
| $C_3H_6$ | 90 [ppmC$_3$] |
| $SO_2$ | 20 [vppm] |
| NO | 270 [vppm] |
| $O_2$ | 6 [Vol.-%] |
| $H_2O$ | 10 [Vol.-%] |
| $CO_2$ | 10,7 [Vol.-%] |
| $N_2$ | Rest |
| Gasmenge | 1950 [Nl/h] |
| Katalysatorgröße | Ø 25 mm x 76 mm |
| Raumgeschwindigkeit | 50000 [h$^{-1}$] |
| Aufheizungsrate | 15 [°C/min] |

**Tabelle 3:** Zusammensetzung und Herstellbedingungen der untersuchten Katalysatoren

| Beispiel | Trägeroxid | Zeolith | Platinsalz | Konzentration [g/l] | Gewichts-verhältnis Pt-Trägeroxid/ Pt-Zeolith | Platinbeladung [g/l] | Calcinierung des Pt-Trägeroxidpulvers |
|---|---|---|---|---|---|---|---|
| VB1 | Nr. 3 | Y-Zeolith, Modul 60 | $(EA)_2Pt(OH)_6$ | 126 | 6 : 1 | 3,17 | Sprühcalcinierung |
| VB2 | Nr. 2 | Y-Zeolith, Modul 60 | $(EA)_2Pt(OH)_6$ | 126 | 6 : 1 | 3,17 | Sprühcalcinierung |
| VB3 | Nr. 1 | Y-Zeolith, Modul 60 | $(EA)_2Pt(OH)_6$ | 126 | 6 : 1 | 3,17 | Sprühcalcinierung |
| VB4 | Nr. 4 | Y-Zeolith, Modul 60 | $(EA)_2Pt(OH)_6$ | 126 | 6 : 1 | 3,17 | Sprühcalcinierung |
| B1 | Nr. 6 | Y-Zeolith, Modul 60 | $(EA)_2Pt(OH)_6$ | 126 | 6 : 1 | 3,17 | Sprühcalcinierung |
| B2 | Nr. 6 | Y-Zeolith, Modul 60 ZSM-5, Modul>400 | $(EA)_2Pt(OH)_6$ | 97 | 2,2 : 1 | 3,17 | Sprühcalcinierung |
| B3 | Nr. 6 | Y-Zeolith, Modul 60 ZSM-5, Modul>400 | $(EA)_2Pt(OH)_6$ | 97 | 2,2 : 1 | 3,17 | Keine |
| B4 | Nr. 6 | Y-Zeolith, Modul 60 ZSM-5, Modul>400 | $(EA)_2Pt(OH)_6$ | 66 | 1,2 : 1 | 1,06 | Sprühcalcinierung |
| B5 | Nr. 6 | Y-Zeolith, Modul 60 ZSM-5, Modul>400 | $[Pt(NH_3)_4](NO_3)_2$ | 97 | 2,2 : 1 | | Sprühcalcinierung |
| B6 | Nr. 6 | Y-Zeolith, Modul 60 ZSM-5, Modul>400 | $[Pt(NH_3)_4](OH)_2$ | 97 | 2,2 : 1 | 3,17 | Sprühcalcinierung |

Zur Messung der im Abgas enthaltenen Gaskomponenten wurden die in Tabelle 5 angegebenen Meßgeräte verwendet.

Tabelle 5:

| Zusammenstellung der Meßgeräte zur Messung der Abgaskonzentration im Synthesegasteststand | | |
|---|---|---|
| **Analysiertes Gas** | **Meßgerät** | **Hersteller** |
| $O_2$ | Oxymat | Siemens AG |
| Kohlenwasserstoff | FID | Pierburg Meßtechnik |
| $NO_x$ | CLD 700 Elht | Zellweger ECO-Systeme |
| CO | Binos | Rosemount |
| $CO_2$ | Binos | Rosemount |
| $SO_2$ | Binos | Rosemount |

Die Messungen wurden sowohl an frischen als auch an gealterten Katalysatoren vorgenommen (Ofenalterung: 48 h bei 350 °C im durchströmenden Modellabgas: Raumgeschwindigkeit von 15.000 $h^{-1}$, 10 vol.-% $H_2O$, 10 Vol.-% $O_2$, 10 vol.-% $CO_2$, 85 Vol.ppm $SO_2$, 270 Vol.-ppm NO, Rest $N_2$).

Zur Bestimmung der Anspringtemperaturen wurde das Abgas mit einer Aufheizrate von 15 °C/min erwärmt.

Die Berechnung der Umsetzungsraten erfolgte mittels folgender Formel

$$X = \frac{N_E - N_A}{N_E} \cdot 100\%$$

X = Umsetzungsrate [%]
NE = Konzentration des Schadstoffes vor Katalysator [Vol.-ppm]
NA = Konzentration des Schadstoffes nach Katalysator [Vol.-ppm]

Die Ergebnisse der Messungen sind in Tabelle 6 für die frischen und gealterten Katalysatoren aufgeführt. Zusätzlich sind die Schwefelkonzentration der gealterten Katalysatoren, die durch eine post-mortem-Analyse mittels LECO-Methode durchgeführt wurden, aufgeführt.

Tabelle 6 zeigt sehr deutlich, daß die erfindungsgemäßen Katalysatoren der Beispiele B1 bis B6 sehr schwefelresistent sind, im Gegensatz zu den Vergleichskatalysatoren VB1 bis VB4. Dies äußert sich zum einen in einer sehr geringen Schwefelaufnahme der erfindungsgemäßen Katalysatoren wie auch in einer noch sehr guten katalytischen Aktivität nach Alterung.

**Tabelle 5:** katalytische Aktivität der Beispielkatalysatoren im Frischzustand und nach Ofenalterung sowie Schwefelaufnahme der gealtertern Katalysatoren

| Kataly-satoren | Frisch | | gealtert[1] | | |
|---|---|---|---|---|---|
| | $T_{50,CO}$ [°C][2] | $T_{50,HC}$ [°C] | $T_{50,CO}$ [°C] | $T_{50,HC}$ [°C] | S-Konz. [%][3] |
| VB1 | 144 | 158 | 161 | 174 | 0.90 |
| VB2 | 155 | 169 | 185 | 201 | 1.50 |
| VB3 | 149 | 166 | 169 | 189 | 1.20 |
| VB4 | 152 | 165 | 170 | 182 | 0.61 |
| B1 | 145 | 155 | 146 | 155 | 0.10 |
| B2 | 141 | 152 | 141 | 153 | 0.10 |
| B3 | 144 | 155 | 144 | 157 | 0.10 |
| B4 | 185 | 193 | 186 | 193 | 0.08 |
| B5 | 153 | 162 | 155 | 164 | 0.10 |
| B6 | 151 | 158 | 153 | 159 | 0.11 |

[1] Ofenalterung für 48 h bei 350 °C im durchströmenden Modellabgas: Raumgeschwindigkeit von 15.000 $h^{-1}$, 10 vol.-% $H_2O$, 10 vol.-% $O_2$, 10 vol.-% $CO_2$, 85 Vol.-ppm $SO_2$, 270 Vol.-ppm NO, Rest $N_2$

[2] katalytische Aktivität der Katalysatoren gekennzeichnet durch die sogenannte An-springtemperatur, bei der 50 % Schadstoffumsetzung erreicht wirden

[3] Bestimmung der Schwefelkonzentration der gealterten Katalysatoren durch post-mortem-Analyse mittels LECO-Methode

**Anwendungsbeispiel 2**

In einem zweiten Anwendungsbeispiel wurden die katalytischen Aktivitäten der Abgasreinigungskatalysatoren der vorstehenden Beispielkatalysatoren am realen Dieselmotor im frischen und gealterten Zustand vermessen. Die Alterung erfolgte durch mehrmaliges Durchlaufen des in Figur 1 dargestellten Alterungszyklus. Die Alterung erfolgte an einem modernen PKW-Dieselmotor mit einem Hubraumvolumen von 1.9 L. Für diese Alterung wurde ein Dieselkraftstoff verwendet, der gegenüber herkömmlichen Dieseltreibstoff mit 2400 Gew.-ppm Schwefel eine um den Faktor 10 höhere Schwefelmenge aufwies. Dadurch wurde gewährleistet, daß die Katalysatoren um ein Vielfaches schneller altern. Die Beurteilung der Aktivitäten und der physikochemischen Daten der untersuchten Katalysatoren entsprechen einer realen Alterung eines Katalysators nach zirka dreißigtausend Kilometern. Diese Alterung gibt ein repräsentatives Bild eines im realen Straßenbetrieb gealterten Katalysators wieder.

Die Bestimmung der katalytischen Aktivität am Motor erfolgte durch einen sogenannten Anspringtest. Der Katalysator wurde hierbei zunächst für 5 Minuten bei einer Abgastemperatur von 100 °C mit Dieselabgas konditioniert. Anschließend wurde ein Stufentest durchlaufen, bei dem alle 20 Minuten eine um 10 °C höhere Abgastemperatur eingestellt wurde. Die Erhöhung der Abgastemperatur erfolgte durch eine Lasterhöhung des Motors.

Die Anspringtemperaturen der untersuchten Katalysatoren im frischen und gealterten Zustand sind in Tabelle 7 durch Angabe der $T_{50}$-Temperaturen für CO und HC aufgeführt.

Tabelle 7 enthält zusätzliche physikochemische post-mortem-Daten der gealterten Katalysatoren. Untersucht wurde die Schwefelkonzentration mittels der LECO- sowie die spezifischen Oberflächen mittels der BET-Methode nach DIN 66131.

Tabelle 7 zeigt, daß die erfindungsgemäßen Katalysatoren der Beispiele B1 bis B6 durch die Motoralterung eine sehr geringe katalytische Verschlechterung aufweisen, wohingegen die Vergleichskatalysatoren VB1 bis VB4 deutlich an Aktivität verlieren. Die physikochemischen Analysen zeigen, daß die Verschlechterung zum einen auf einen Rückgang der spezifischen Oberfläche verursacht durch ein "Verkleben der Poren" durch adsorbierte Kohlenwasserstoffe sowie durch eine hohe Aufnahme des Katalysatorgiftes Schwefel zurückzuführen ist. Die erfindungsgemäßen Katalysatoren der Beispiele B 1 bis B6 weisen aufgrund der Chemie und der Morphologie der verwendeten Trägermaterialien diese Effekte nicht auf.

**Tabelle 6:** katalytische Aktivität und physikochemische Charakterisierung der Beispielkatalysatoren im Frischzustand und nach Motoralterung (45 Stunden mit einem 2400 Gew.-ppm S-haltigen Dieseltreibstoff)

| Katalysator | Frisch | | | Gealtert | | | |
| | $T_{50,CO}$ $[°C]^1$ | $T_{50,HC}$ $[°C]$ | BET $[m^2/g]^2$ | $T_{50,CO}$ $[°C]$ | $T_{50,HC}$ $[°C]$ | BET $[m^2/g]$ | S-Konz. $[\%]^3$ |
|---|---|---|---|---|---|---|---|
| VB1 | 110 | 168 | 33 | 154 | 193 | 23 | 0,98 |
| VB2 | 125 | 173 | 51 | 175 | 208 | 18 | 1,47 |
| VB3 | 115 | 176 | 31 | 165 | 201 | 22 | 1,37 |
| VB4 | 123 | 171 | 45 | 166 | 197 | 33 | 0,71 |
| B1 | 114 | 173 | 36 | 115 | 176 | 36 | 0,10 |
| B2 | 110 | 170 | 36 | 110 | 175 | 36 | 0,10 |
| B3 | 112 | 170 | 35 | 113 | 172 | 35 | 0,09 |
| B4 | 135 | 191 | 29 | 137 | 194 | 29 | 0,07 |
| B5 | 121 | 182 | 35 | 123 | 185 | 35 | 0,09 |
| B6 | 120 | 179 | 35 | 122 | 182 | 36 | 0,10 |

[1] katalytische Aktivität der Katalysatoren gekennzeichnet durch die sogenannte Anspringtemperatur, bei der 50 % Schadstoffumsetzung erreicht wird

[2] Bestimmung der spezifischen Oberfläche der Katalysatoren mittels der BET-Methode

[3] Bestimmung der Schwefelkonzentration der gealterten Katalyatoren durch post-mortem-Analyse mittels LECO-Methode

**Patentansprüche**

**1.** Katalysator für die Reinigung der Abgase eines Verbrennungsmotors, welcher auf einem inerten Wabenkörper aus Keramik oder Metall eine katalytisch aktive Beschichtung aufweist, die auf einem feinteiligen, oxidischen Trägermaterial wenigstens eines der Platingruppenmetalle Platin, Palladium, Rhodium und Iridium enthält,
**dadurch gekennzeichnet,**
**daß** das oxidische Trägermaterial ein Material geringer Porosität auf der Basis von Siliciumdioxid ist, welches sich aus Aggregaten von kugelförmigen Primärteilchen mit einem mittleren Partikeldurchmesser zwischen 7 und 60 nm zusammensetzt.

2. Katalysator nach Anspruch 1,
**dadurch gekennzeichnet,**
**daß** das oxidische Trägermaterial mittlere Partikeldurchmesser der Primärteilchen zwischen 20 und 50 nm aufweist.

3. Katalysator nach Anspruch 2,
**dadurch gekennzeichnet,**
**daß** das oxidischen Trägermaterial eine Porenradienverteilung mit einem Maximum oberhalb von 20 nm aufweist.

4. Katalysator nach Anspruch 3,
**dadurch gekennzeichnet,**
**daß** das oxidische Trägermaterial ein Porenvolumen aufweist, wobei der Anteil des Porenvolumens mit Porendurchmessern kleiner als 30 nm geringer als 0,2 ml/g ist.

5. Katalysator nach Anspruch 4,
**dadurch gekennzeichnet,**
**daß** der pH-Wert einer 4 %-igen wäßrigen Dispersion des Trägermaterials geringer als 6 ist.

6. Katalysator nach Anspruch 1,
**dadurch gekennzeichnet,**
**daß** das Trägermaterial mit einem oder mehreren Oxiden aus der Gruppe Aluminiumoxid, Zirkonoxid, Erdalkalimetalloxiden und Seltenerdoxiden dotiert ist und die Masse aller Dotierungselemente zusammen zwischen 0,01 und 20 Gew.-% liegt, bezogen auf das Gesamtgewicht des Trägermaterials.

7. Katalysator nach Anspruch 6,
**dadurch gekennzeichnet,**
**daß** das Trägermaterial mit Aluminiumoxid in einer Menge zwischen 0,05 und 1 Gew.-% dotiert ist.

8. Katalysator nach Anspruch 1,
**dadurch gekennzeichnet,**
**daß** das oxidischen Trägermaterial eine pyrogen nach der Art der Flammenoxidation oder der Flammenhydrolyse hergestellte Kieselsäure ist.

9. Katalysator nach Anspruch 1,
**dadurch gekennzeichnet,**
**daß** eines der Platingruppenmetalle Platin ist.

10. Katalysator nach Anspruch 9,
**dadurch gekennzeichnet,**
**daß** die katalytisch aktive Beschichtung zusätzlich einen oder mehrere Zeolithe enthält, auf denen Platin in hochdisperser Form abgeschieden ist.

11. Katalysator nach Anspruch 10,
**dadurch gekennzeichnet,**
**daß** einer der Zeolithe ein dealuminierter Y-Zeolith, ein Beta-Zeolith oder ein Zeolith ZSM-5 jeweils mit einem Modul von größer 40 ist.

12. Katalysator nach Anspruch 10,
**dadurch gekennzeichnet,**
**daß** das Gewichtsverhältnis des oxidischen Trägermaterials zu dem Zeolithgemisch 6:1 bis 1:2 beträgt.

13. Katalysator nach Anspruch 10,

**dadurch gekennzeichnet,**

**daß** mindestens 1 Gewichtsprozent, jedoch maximal nicht mehr als 20 Gewichtsprozent des insgesamt in der katalytisch aktiven Schicht befindlichen Platins auf dem Zeolithgemisch abgeschieden sind.

**14.** Katalysator nach Anspruch 1,
**dadurch gekennzeichnet,**
**daß** die katalytisch aktive Beschichtung in einer Konzentration von 40 bis 300 g/l Wabenkörpervolumen auf dem Wabenkörper vorliegt.

**15.** Katalysator nach Anspruch 14,
**dadurch gekennzeichnet,**
**daß** die Platingruppenmetalle in einer Konzentration von 0,01 bis 8 g/l Wabenkörpervolumen vorliegen.

**16.** Verfahren zur Herstellung eines Katalysators nach einem der Ansprüche 1 bis 15 durch Beschichten des Wabenkörpers mit einer Beschichtungssuspension, welche das oxidische Trägermaterial und die darauf abgeschiedenen Platingruppenmetalle enthält,
**dadurch gekennzeichnet,**
**daß** zur Herstellung der Beschichtungssuspension das oxidische Trägermaterial in sprühgetrockneter Form mit einer Stampfdichte von mehr als 200 g/l verwendet wird.

**17.** Verfahren nach Anspruch 16,
**dadurch gekennzeichnet,**
**daß** die Stampfdichte größer als 500 g/l ist.

**18.** Verfahren nach Anspruch 16,
**dadurch gekennzeichnet,**
**daß** auf dem oxidischen Trägermaterial Platin abgeschieden ist.

**19.** Verfahren nach Anspruch 18,
**dadurch gekennzeichnet,**
**daß** die Beschichtungssuspension zusätzlich Zeolithe mit einem Gewichtsverhältnis des oxidischen Trägermaterials zu den Zeolithen von 6:1 bis 1:2 beträgt.

**20.** Verfahren nach Anspruch 18,
**dadurch gekennzeichnet,**
**daß** auf den Zeolithen Platin in einer Menge abgeschieden ist, die 1 bis 20 Gewichtsprozent, bezogen auf die Gesamtmenge des Platins auf dem oxidischen Trägermaterial und den Zeolithen, beträgt.

**21.** Verfahren zur Herstellung eines Katalysators nach einem der Ansprüche 1 bis 15 durch Beschichten des Wabenkörpers mit einer Beschichtungssuspension, welche das oxidische Trägermaterial enthält,
**dadurch gekennzeichnet,**
**daß** zur Herstellung der Beschichtungssuspension das oxidische Trägermaterial in sprühgetrockneter Form mit einer Stampfdichte von mehr als 200 g/l verwendet wird.

**22.** Verfahren nach Anspruch 21,
**dadurch gekennzeichnet,**
**daß** die Stampfdichte größer als 500 g/l ist.

**23.** Verfahren nach Anspruch 21,
**dadurch gekennzeichnet,**
**daß** die Beschichtungssuspension zusätzlich Zeolithe mit einem Gewichtsverhältnis des oxidischen Trägermaterials zu den Zeolithen von 6:1 bis 1:2 beträgt.

**24.** Verfahren nach Anspruch 23,
**dadurch gekennzeichnet,**
**daß** nach Beschichten des Wabenkörpers mit der Beschichtungssuspension eine nachträgliche Imprägnierung mit Platin erfolgt.

**25.** Katalysator für die Reinigung der Abgase eines Verbrennungsmotors, welcher auf einem inerten Wabenkörper aus Keramik oder Metall eine katalytisch aktive Beschichtung aufweist, die auf einem feinteiligen, oxidischen Trägermaterial wenigstens eines der Platingruppenmetalle Platin, Palladium, Rhodium und Iridium enthält, **dadurch gekennzeichnet,** **daß** das es sich bei dem oxidischen Trägermaterial um feinteiliges Siliciumdioxid mit folgenden Eigenschaften handelt

a) es setzt sich aus Aggregaten von kugelförmigen Primärteilchen mit einem mittleren Partikeldurchmesser zwischen 15 und 60 nm zusammen,
b) die spezifische Oberfläche liegt zwischen 30 und 150 $m^2$/g,
c) das Maximum der Porenradienverteilung befindet sich oberhalb von 20 nm,
d) das Gesamtvolumen der Poren mit einem Porendurchmesser kleiner als 30 nm ist geringer als 0,2 ml/g und
e) der pH-Wert einer 4 %-igen wäßrigen Dispersion des Trägermaterials weist einen Wert von weniger als 6 auf.

**26.** Katalysator nach Anspruch 25, **dadurch gekennzeichnet,** **daß** die spezifische Oberfläche des Siliciumdioxids kleiner als 100 $m^2$/g ist.

**27.** Katalysator nach Anspruch 26, **dadurch gekennzeichnet,** **daß** der Katalysator zusätzlich ein oder mehrere Zeolithe enthält, wobei das Gewichtsverhältnis von Siliciumdioxid zu den Zeolithen zwischen 6:1 und 1:2 beträgt.

**28.** Katalysator nach Anspruch 27, **dadurch gekennzeichnet,** **daß** als Platingruppenmetall Platin vorliegt, welches sowohl auf dem Siliciumdioxid als auch auf den Zeolithen abgeschieden ist, wobei mindestens 1 Gewichtsprozent, jedoch maximal nicht mehr als 20 Gewichtsprozent des im Katalysator vorliegenden Platins auf den Zeolithen abgeschieden sind.

**29.** Verwendung des Katalysators nach einem der Ansprüche 1 bis 15 und 25 bis 28 für die oxidative Reinigung der Abgase von Dieselmotoren.

Europäisches
Patentamt

**EUROPÄISCHER RECHERCHENBERICHT**

Nummer der Anmeldung

EP 01 11 9213

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | US 5 002 918 A (DELLER KLAUS ET AL) 26. März 1991 (1991-03-26)<br><br>* Spalte 2, Zeile 64 - Spalte 3, Zeile 2 *<br>* Spalte 3, Zeile 15 - Zeile 16 *<br>* Spalte 1, Zeile 61 *<br>* Spalte 1, Zeile 20 *<br>* Ansprüche 1,5; Beispiele 2,5,7 * | 1-3,5-8, 10-12, 14,25, 26,29 | B01J21/08 B01J23/40 B01J35/10 B01J37/08 B01J35/04 B01J35/02 B01J37/00 B01J37/02 |
| Y | PATENT ABSTRACTS OF JAPAN vol. 1997, no. 01, 31. Januar 1997 (1997-01-31) & JP 08 243397 A (NISSAN MOTOR CO LTD), 24. September 1996 (1996-09-24) * Zusammenfassung * | 1-3,5-8, 10-12, 14,25, 26,29 | |
| A | EP 0 807 615 A (DEGUSSA) 19. November 1997 (1997-11-19) * Seite 2, Zeile 31-38 * * Seite 3, Zeile 28 - Zeile 30 * * Seite 7; Abbildung 1 * | 1-3,25 | |
| A | EP 0 916 402 A (DEGUSSA) 19. Mai 1999 (1999-05-19) * Seite 2, Zeile 35 - Zeile 45 * * Seite 3, Zeile 40 - Zeile 41 * * Seite 7 * | 1,2,25 | RECHERCHIERTE SACHGEBIETE (Int.Cl.7)<br><br>B01J |
| A | PATENT ABSTRACTS OF JAPAN vol. 018, no. 248 (C-1198), 12. Mai 1994 (1994-05-12) & JP 06 031174 A (NISSAN MOTOR CO LTD), 8. Februar 1994 (1994-02-08) * Zusammenfassung * | 1-3,5-8, 10-12, 14,25, 26,29 | |

-/--

Der vorliegende Recherchenbericht wurde für alle Patentansprüche erstellt

| Recherchenort | Abschlußdatum der Recherche | Prüfer |
|---|---|---|
| MÜNCHEN | 31. Oktober 2001 | Jochheim, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

\.................................................
& : Mitglied der gleichen Patentfamilie,übereinstimmendes Dokument

EPO FORM 1503 03.82 (P04C03)

# EP 1 287 886 A1

EUROPÄISCHES RECHERCHENBERICHT

**Europäisches Patentamt**

Nummer der Anmeldung

EP 01 11 9213

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 5 976 480 A (KLEINSCHMIT PETER ET AL) 2. November 1999 (1999-11-02) * Spalte 1, Zeile 57 – Spalte 2, Zeile 24; Beispiel 2; Tabelle 1 * | 8 | |
| | | | **RECHERCHIERTE SACHGEBIETE (Int.Cl.7)** |

Der vorliegende Recherchenbericht wurde für alle Patentansprüche erstellt

| Recherchenort | Abschlußdatum der Recherche | Prüfer |
|---|---|---|
| MÜNCHEN | 31. Oktober 2001 | Jochheim, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**EP 1 287 886 A1**

**ANHANG ZUM EUROPÄISCHEN RECHERCHENBERICHT
ÜBER DIE EUROPÄISCHE PATENTANMELDUNG NR.**  EP 01 11 9213

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-10-2001

| Im Recherchenbericht angeführtes Patentdokument | | Datum der Veröffentlichung | Mitglied(er) der Patentfamilie | | Datum der Veröffentlichung |
|---|---|---|---|---|---|
| US 5002918 | A | 26-03-1991 | DE | 3803899 C1 | 13-04-1989 |
| | | | AT | 74798 T | 15-05-1992 |
| | | | BR | 8900521 A | 03-10-1989 |
| | | | DE | 58901127 D1 | 21-05-1992 |
| | | | EP | 0327815 A1 | 16-08-1989 |
| | | | ES | 2032340 T3 | 01-02-1993 |
| | | | GR | 3004696 T3 | 28-04-1993 |
| | | | JP | 1226764 A | 11-09-1989 |
| | | | JP | 1948823 C | 10-07-1995 |
| | | | JP | 6074171 B | 21-09-1994 |
| | | | MX | 14847 A | 01-12-1993 |
| JP 08243397 | A | 24-09-1996 | KEINE | | |
| EP 0807615 | A | 19-11-1997 | DE | 19619961 A1 | 20-11-1997 |
| | | | BR | 9704229 A | 05-01-1999 |
| | | | CA | 2205416 A1 | 17-11-1997 |
| | | | EP | 0807615 A1 | 19-11-1997 |
| | | | JP | 3005642 B2 | 31-01-2000 |
| | | | JP | 10081508 A | 31-03-1998 |
| | | | SG | 72737 A1 | 23-05-2000 |
| | | | TW | 430650 B | 21-04-2001 |
| | | | US | 6207610 B1 | 27-03-2001 |
| EP 0916402 | A | 19-05-1999 | DE | 19750238 A1 | 27-05-1999 |
| | | | BR | 9804630 A | 11-04-2000 |
| | | | CZ | 9803670 A3 | 16-06-1999 |
| | | | EP | 0916402 A1 | 19-05-1999 |
| | | | JP | 11268017 A | 05-10-1999 |
| | | | NO | 985276 A | 14-05-1999 |
| | | | SG | 74670 A1 | 24-10-2000 |
| JP 06031174 | A | 08-02-1994 | KEINE | | |
| US 5976480 | A | 02-11-1999 | DE | 19530339 A1 | 20-02-1997 |
| | | | DE | 59601291 D1 | 25-03-1999 |
| | | | EP | 0759410 A1 | 26-02-1997 |
| | | | JP | 9142829 A | 03-06-1997 |
| | | | KR | 232438 B1 | 01-12-1999 |

Für nähere Einzelheiten zu diesem Anhang : siehe Amtsblatt des Europäischen Patentamts, Nr.12/82